# EUROPEAN PATENT APPLICATION

(11) **EP 4 435 070 A1**
(43) Date of publication of application: **25.09.2024**
(21) Application number: 22894995.4
(22) Date of filing: 21.11.2022
(51) Int. Cl.: C09D 163/00, C09D 175/06, C09D 7/61, C09D 5/25, C09D 7/20

(54) **LOW-VISCOSITY SILICON STEEL ENVIRONMENTALLY FRIENDLY INSULATING COATING, SILICON STEEL PLATE AND MANUFACTURING METHOD THEREFOR**

(30) Priority: 22.11.2021 CN 202111382667
(71) Applicant: BAOSHAN IRON & STEEL CO., LTD., Shanghai 201900 (CN)
(72) Inventor: LI, Dengfeng, Shanghai 201900 (CN); HAO, Yunwei, Shanghai 201900 (CN); XIAO, Pan, Shanghai 201900 (CN); WANG, Bo, Shanghai 201900 (CN); LI, Guobao, Shanghai 201900 (CN); SHEN, Kejin, Shanghai 201900 (CN); WANG, Zhicheng, Shanghai 201900 (CN); JIANG, Quanli, Shanghai 201900 (CN)
(74) Representative: Nederlandsch Octrooibureau
(86) International application number: PCT/CN2022/133232
(87) International publication number: WO 2023/088466

(57) **Abstract**

The present disclosure relates to an insulating coating, which comprises the following components: a water-soluble metal inorganic salt A containing a water-soluble phosphate A1, which comprises a water-soluble phosphate of at least one of aluminum, zinc, magnesium and manganese; a water dispersible organic emulsion B, which comprises at least one of an epoxy emulsion and a curing agent thereof, polyester, polyurethane, polyacrylate and an ethylene-vinyl acetate copolymer; an additive C, which comprises at least one of a structure reinforcing additive C1 and a heat-resistance reinforcing additive C2, wherein the structure reinforcing additive C1 comprises an inorganic nanoparticulate matter, and the heat-resistance reinforcing additive C2 is selected from at least one of boric acid and a water-soluble salt of molybdenum, tungsten, vanadium or titanium; an auxiliary agent D1 and a solvent D2, wherein the solid content ratio of the water-soluble metal inorganic salt A to the water dispersible organic emulsion B is (35-85) : (15-65) in part by mass. In addition, the present disclosure further relates to a silicon steel plate, and the surface of the substrate thereof is provided with a coating layer formed by the insulating coating of the present disclosure.

## Description

### TECHNICAL FIELD

The present disclosure relates to a coating, a silicon steel plate and a manufacturing method therefor, in particular to an insulating coating, a silicon steel plate and a manufacturing method therefor.

### BACKGROUND

In recent years, as China has been vigorously promoting development of new energy vehicles, more and more automobile manufacturers and researchers have joined in the research and development team in the field of new energy vehicles. During research and development of the new energy vehicles, it is found that new energy vehicles usually have high performance requirements for their advanced motors. Compared with the performance requirements for conventional motors, advanced motors such as those used in new energy vehicles generally require motor cores to have characteristics of high fixation strength, high core efficiency and low magnetic vibration noise.

In prior arts, silicon steels with a special C-3 type coating, such as a self-bonding coating, is adopted in general for manufacturing iron cores that meet the above performance requirements. For example, many Chinese and foreign patent applications such as CN201810275197.8, CN201810885096.2, CN202010591227.3, CN200580037004.6, CN 200410017997.8, US 2007/0087201, WO 2004/070080, and JPH 621274 A disclose composition and application of such C-3 type self-bonding coating product.

However, due to the following reasons, such C-3 type self-bonding coating product can only be used for some users or machine types at present and cannot be widely applied.
(1) Self-bonding coating products are high in price, resulting in high usage costs.
(2) A single-sided film thickness of the self-bonding coating is usually ≥3 µm. The thicker the film thickness or the thinner the base material, the lower the lamination coefficient of the iron core, which affects the motor efficiency.
(3) The main component of a self-bonding coating is organic resin, which cannot withstand a stress relief annealing temperature of 750°C or above and/or a bluing process conducted at a temperature of 400°C or above. There are even few coating products that can withstand a temperature of 210°C for a long time. Self-bonding coating products have poor weldability.
(4) The self-bonding coating on an iron core may have the problems of being squeezed out at the edges under hot-pressing during final curing.

Therefore, the actual application effect of the above C-3 type self-bonding coating products is poor.

So far, C-5 type phosphate-based environmentally friendly thin coating (a film thickness: 0.5 µm to 1.5 µm) products are still widely used as the mainstream coating for advanced motors represented by new energy vehicles. C-5 type phosphate-based environmentally friendly thin coating products are the most widely used and the most maturely developed and are relatively low in production costs.

In prior arts, silicon steel plates with a conventional C-5 type phosphate-based environmentally friendly thin coating have excellent performances, such as excellent basic performances including insulativity (≥5 Ω.cm²/piece, ASTM A717, 1µm film thickness), adhesiveness (grade A, GB/T 2522), heat resistance (resistant to a stress relief annealing temperature of 750°C or greater, IEC 60404-12), weldability (≥40 cm/min, SEP 1210).

However, in order to pursue higher efficiency of motors, some users may use a dedicated device to perform array adhesive dispensing on the surface of silicon steel sheets with adhesive, so that two adjacent silicon steel sheets are bonded and assembled. This treatment not only raises a requirement for a high bonding strength for the compatibility of the coating material on the surface of the silicon steel plate and an adhesive, but also presents a challenge to the adaptability of a dispensing device and a process and the stability of large-scale mass production, and is high in manufacturing cost.

Thus, in prior arts, conventional silicon steel plates coated with a C-5 type coating or a C-3 type self-bonding coating have certain drawbacks and shortcomings, and cannot meet the further demands for the motor core in the industry.

Thus, the driving motor core industry with higher requirements for fixation strength, magnetic vibration noise and efficiency of iron cores is in urgent need for a silicon steel product which is low in cost and high in manufacturability and has an environmentally friendly functional coating.

In light of this, it is desired in the field to obtain a new environmentally friendly insulating coating with mild bonding property for silicon steel that can be coated on the surface of the substrate of the silicon steel plate and form a coating on the substrate. In addition to the characteristics of the conventional C-5 type coating, it is desired that such coating also has a lamination bonding effect similar to that of the C-3 type self-bonding coating (but does not necessarily achieve the high bonding strength of the C-3 type self-bonding coating, which generally requires a bonding strength of 7 N/mm² or higher, ISO 4587 tensile shear method), and does not have the disadvantage of the C-3 type self-bonding coating that cannot withstand thermal treatment.

### SUMMARY

One objective of the present disclosure is to provide an insulating coating, which forms a coating that not only has the basic performances such as good insulation, adhesion, heat resistance and weldability of conventional C-5 type coatings, but also has a lamination bonding effect similar to that of a C-3 type self-bonding coating, and still has certain bonding properties (e.g., bonding strength ≥2 N/mm², ISO 4587 tensile shear method) after secondary thermal/pressing treatment. Thus, a certain bonding force can be generated between iron core sheets, so that an iron core structure is reinforced as a whole, and the problems of low fixation strength, low inherent frequency and high vibration noise of an iron core can be effectively solved, and a motor with higher efficiency and lower vibration noise can be obtained.

In order to achieve the above objective, in the first aspect, the present disclosure provides an insulating coating, including the following components (preferably including the following components as effective components):
a water-soluble metal inorganic salt A comprising a water-soluble phosphate A1, wherein the water-soluble phosphate A1 includes a water-soluble phosphate of at least one of aluminum, zinc, magnesium and manganese;
a water dispersible organic emulsion B comprising at least one of an epoxy emulsion and a curing agent thereof, a polyester, a polyurethane, a polyacrylate and an ethylene-vinyl acetate copolymer; an additive C comprising at least one of a structure reinforcing additive C1 and a heat-resistance reinforcing additive C2, wherein the structure reinforcing additive C1 comprises inorganic nanoparticles, and wherein the heat-resistance reinforcing additive C2 is selected from at least one of boric acid and water-soluble salts of molybdenum, tungsten, vanadium or titanium;
an auxiliary agent D1; and
a solvent D2;
wherein the solid content ratio of the water-soluble metal inorganic salt A to the water dispersible organic emulsion B is (35-85):(15-65) in part by mass.

The coating formed by the insulating coating of the present disclosure may be classified as a C-5 or EC-5 type coating according to ASTM A976 or DIN EN 10342 standards. The coating formed by the insulating coating of the present disclosure not only has the basic performances such as good insulation, adhesion, heat resistance and weldability of conventional C-5 type coatings, but also has a lamination bonding effect similar to that of the C-3 type self-bonding coating (but does not necessarily achieve the high bonding strength of the C-3 type self-bonding coating, which generally requires a bonding strength of 7 N/mm² or higher, ISO 4587 tensile shear method), and does not have the disadvantage of the C-3 type self-bonding coating that cannot withstand thermal treatment.

Preferably, in the insulating coating of the present disclosure, the solid content ratio of the water-soluble metal inorganic salt A to the water dispersible organic emulsion B is (40-75) : (25-60) in part by mass.

Preferably, in the insulating coating of the present disclosure, the water-soluble metal inorganic salt A further comprises a water-soluble silicate A2. Hardness of the coating formed by the insulating coating may be improved to a certain degree by adding an appropriate amount of water-soluble silicate A2 into the insulating coating of the present disclosure. However, the water-soluble silicate A2 is not supposed to be added excessively, because when there is an excess of water-soluble silicate A2, it is easy to cause the problem of poor compatibility and stability of the coating system. Therefore, in the insulating coating of the present disclosure, in terms of mass percentage, the water-soluble silicate A2 accounts for 0 to 5% of the solid content of the water-soluble metal inorganic salt A.

Preferably, in the insulating coating of the present disclosure, the water-soluble silicate A2 has a modulus of less than 4.

Preferably, in the insulating coating of the present disclosure, the water-soluble silicate A2 includes sodium silicate and/or potassium silicate.

Preferably, in the insulating coating of the present disclosure, in terms of mass percentage, the water-soluble phosphate A1 accounts for 95% to 100% of the solid content of the water-soluble metal inorganic salt A, and the water-soluble silicate A2 accounts for 0 to 5% of the solid content of the water-soluble metal inorganic salt A.

Preferably, in the insulating coating of the present disclosure, the water-soluble metal inorganic salt A comprises at least a water-soluble phosphate of aluminum.

Preferably, in the insulating coating of the present disclosure, in terms of mass percentage, the water-soluble phosphate of aluminum accounts for 70% to 100% of the solid content of the water-soluble phosphate A1.

Preferably, the water-soluble phosphates of zinc, magnesium and manganese are respectively zinc dihydrogen phosphate, magnesium dihydrogen phosphate and manganese dihydrogen phosphate, and the total content thereof is 0 to 30% by mass of the water-soluble phosphate A1.

Preferably, in the insulating coating of the present disclosure, the water dispersible organic emulsion B has an average particle diameter D₅₀ of 2 µm or less, an average particle diameter D₉₀ of 5 µm or less, and a maximum particle diameter of 10 µm or less.

Preferably, in the insulating coating of the present disclosure, the water dispersible organic emulsion B has an average particle diameter D₅₀ of 1 µm or less and an average particle diameter D₉₀ of 3 µm or less .

Preferably, in the insulating coating of the present disclosure, the water dispersible organic emulsion B includes the epoxy emulsion and the curing agent thereof. The epoxy emulsion and the curing agent thereof can play a main role in bonding in the coating formed by the insulating coating of the present disclosure and meanwhile improve the mechanical protection property, insulativity and heat resistance of the final coating.

Preferably, in the insulating coating of the present disclosure, the curing agent of the epoxy emulsion is selected from at least one of dicyandiamide, amino resin, imidazole and polyisocyanate.

Preferably, in the insulating coating of the present disclosure, the curing agent of the epoxy emulsion is micronized dicyandiamide having an average particle diameter D₅₀ of 5 µm or less and an average particle diameter D₉₀ of 10 µm or less.

Preferably, in the insulating coating of the present disclosure, the water dispersible organic emulsion B comprises the epoxy emulsion and the curing agent thereof, wherein in terms of mass percentage, the epoxy emulsion accounts for 90% to 99% of the solid content of the total of the epoxy emulsion and the curing agent thereof. More preferably, in terms of mass percentage, the epoxy emulsion accounts for 95% to 98% of the solid content of the total of the epoxy emulsion and the curing agent thereof.

Preferably, in the insulating coating of the present disclosure, the epoxy emulsion has an epoxy equivalent in the range of 100 g/eq to 2000 g/eq, preferably 200 g/eq to 1000 g/eq; a weight-average molecular weight Mw in the range of 200 to 4000, preferably 300 to 3000; and a degree of functionality in the range of 2 to 3.

In order to obtain a good balance between the bonding performance and the heat resistance of the coating, preferably, in the insulating coating of the present disclosure, the water dispersible organic emulsion B comprises an ethylene-vinyl acetate copolymer, wherein in terms of mass percentage, the ethylene-vinyl acetate copolymer accounts for 0 to 20% of the solid content of the water dispersible organic emulsion B.

Preferably, in the insulating coating of the present disclosure, the content of vinyl acetate in the ethylene-vinyl acetate copolymer is in the range of 10% by mass to 40% by mass, preferably 15% by mass to 30% by mass.

Preferably, in the insulating coating of the present disclosure, each of the polyurethane and the polyacrylate is an anionic water dispersible emulsion with high molecular weight.

Preferably, in the insulating coating of the present disclosure, the mass of the additive C relative to the total mass of the water-soluble metal inorganic salt A and the water dispersible organic emulsion B is in the range of 0.1% to 10%. When the content of the additive C is lower than the lower limit of the above range, a performance feature of the additive C cannot be obtained; and when the content of the additive C is higher than the upper limit of the above range, it will easily lead to poor stability of the coating, and the lamination bonding strength of the coating will be reduced. In order to obtain a better effect, the mass of the additive C relative to the total mass of the water-soluble metal inorganic salt A and the water dispersible organic emulsion B is more preferably in the range of 0.5% to 5%.

Preferably, in the insulating coating of the present disclosure, aggregates of the inorganic nanoparticles have an average particle diameter in the range of 50 nm to 800 nm, more preferably 80 nm to 500 nm.

Preferably, in the insulating coating of the present disclosure, the inorganic nanoparticles are metal oxides selected from at least one of SiO₂, Al₂O₃, TiO₂, ZnO, ZrO₂, Fe₃O₄ and CaCO₃.

Preferably, in the insulating coating of the present disclosure, the inorganic nanoparticles are SiO₂, Al₂O₃, TiO₂, ZnO or a composite oxide thereof.

Preferably, in the insulating coating of the present disclosure, the heat-resistance reinforcing additive C2 is selected from at least one of boric acid, ammonium molybdate and sodium tungstate.

Preferably, the heat-resistance reinforcing additive C2 is boric acid (H₃BO₃) or a water-soluble salt of a variable valence metal (such as molybdenum, tungsten, vanadium and titanium).

Preferably, in the insulating coating of the present disclosure, the total mass of the auxiliary agent D1 and the solvent D2 relative to the total mass of the water-soluble metal inorganic salt A and the water dispersible organic emulsion B is in the range of 5% to 35%.

Preferably, in order to ensure control capacity of the coating over defects in the coatings which is roll coated at a high speed, in the insulating coating of the present disclosure, the auxiliary agent D1 is selected from at least one of a defoaming agent, a wetting agent, a leveling agent, a thickening agent, an anti-settling agent and a flash rust inhibitor.

Preferably, in the insulating coating of the present disclosure, the solvent D2 includes at least two of ethylene glycol, glycerol, n-butyl alcohol, isobutyl alcohol, isopropyl alcohol, ethylene glycol methyl ether, ethylene glycol butyl ether, propylene glycol methyl ether, propylene glycol butyl ether and propylene glycol methyl ether acetate.

Preferably, the solid content of the insulating coating of the present disclosure is in the range of 15% to 40%.

The insulating coating of the present disclosure is suitable for coating on the surface of the substrate of the silicon steel plate of various motors and electric generator cores, and may form a coating on the substrate, and is especially suitable for coating a non-oriented silicon steel plate used in the fields such as new energy vehicle motors, servo motors and small and special electric machines.

In the second aspect, the present disclosure provides a silicon steel plate comprising a substrate, wherein the substrate has a coating formed of the insulating coating of the present disclosure on its surface.

Preferably, in the silicon steel plate of the present disclosure, the coating has a single-sided dry film thickness in the range of 0.3 µm to 2 µm, preferably 0.5 µm to 1.5 µm.

The silicon steel plate of the present disclosure is coated with the insulating coating of the present disclosure, so that a layer of coating is formed on the substrate of the silicon steel plate. The silicon steel plate of the present disclosure may be used for fabricating iron cores of driving motors, and its coating still has certain bonding properties (e.g., bonding strength is ≥2 N/mm², ISO 4587 tensile shear method) after secondary thermal/pressing treatment. Thus, the problems of low fixation strength, low inherent frequency and high vibration noise of the iron core can be effectively solved. The silicon steel plate of the present disclosure can be widely used in new energy vehicle motors, servo motors and electric machines, and have good popularization prospects and application value.

In the third aspect, the present disclosure provides a method of manufacturing a silicon steel plate, including the following steps: applying the insulating coating on of the present disclosure on a surface of a substrate of the silicon steel plate; and drying the insulating coating at a plate baking temperature of 150°C to 250°C to form a coating.

Compared with prior arts, the insulating coating, the silicon steel plate and the manufacturing method therefor of the present disclosure have the following advantages and beneficial effects: Components of the insulating coating of the present disclosure are made reasonably through optimization design, in which the water-soluble phosphate and the film forming emulsion is used as the basis and the solvent with low toxicity and low harm is selected, so that the obtained insulating coating is a non-hazardous chemical with low volatile organic compounds (VOC) emissions and completely environmentally friendly.

The insulating coating of the present disclosure can be coated on the surfaces of the substrates of silicon steel plates of various motors and generator cores, and may form a coating on the substrate, and is especially suitable for non-oriented silicon steels used in the fields such as new energy vehicle motors, servo motors and small and special electric machines, and has a large space for commercial applications.

The coating formed by the insulating coating of the present disclosure not only has the characteristics of conventional C-5 type coatings, but also has an lamination bonding effect similar to that of the C-3 type self-bonding coatings (but does not necessarily achieve the high bonding strength of the C-3 type self-bonding coatings, which generally require a bonding strength of 7 N/mm² or higher, ISO 4587 tensile shear method), and completely avoids the problems of poor heat resistance, poor weldability, low lamination coefficient and hot-pressing squeeze-out of the C-3 type self-bonding coatings.

The silicon steel plate of the present disclosure may be used for fabricating iron cores of driving motors, and its coating still has certain bonding properties (e.g., bonding strength ≥2 N/mm², ISO 4587 tensile shear method) after secondary thermal/pressing treatment. Thus, a certain bonding force can be generated between iron core sheets, so that an iron core structure is reinforced as a whole, and the problems of low fixation strength, low inherent frequency and high vibration noise of an iron core can be effectively solved, and a motor with higher efficiency and lower vibration noise can be obtained.

The manufacturing method of the silicon steel plate of the present disclosure is environmentally friendly and efficient.

In addition, the silicon steel plate with the coating of the present disclosure may be laminated to form an iron core after shearing and punching process. Then, magnetic steel can be inserted into an iron core slot with an adhesive and subjected to secondary heating/curing treatment. After curing, magnetic steel fixing and iron core assembling are completed. The obtained iron core has high overall strength and a significant improved inherent frequency.

The above secondary curing process may be performed as follows: holding the iron core at a pressure load of 1 MPa to 5 MPa and an iron core temperature of 150°C to 300°C for 1 min~4 h, preferably holding the iron core at a pressure load of 1 MPa to 5 MPa and an iron core temperature of 150°C to 250°C for 10 min~2 h. Although the purpose of the secondary curing process is to cure the adhesive, in fact the entire iron core is also subjected to secondary heating process treatment. Therefore, such thermal process may be fully utilized to perform hot-pressing processing on the silicon steel coating of the laminated core, thereby producing a lamination bonding effect.

### BRIEF DESCRIPTION OF THE DRAWINGS

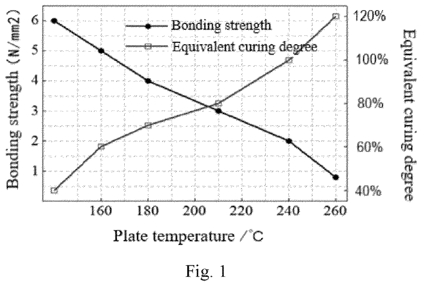

Fig. 1 schematically shows a plot of bonding strength and curing degree as a function of plate baking temperature during manufacturing of a silicon steel plate.

### DETAILED DESCRIPTION

Unless otherwise defined, all technical or scientific terms used herein have the same meanings as usually understood by those ordinarily skilled in the art to which the present disclosure belongs.

As used herein, a term "and/or" refers to and contains any and all possible combinations of one or more listed items.

Herein, "solid content" herein refers to the mass percentage of the remaining part of an emulsion or coating material after drying under specified conditions to the total amount of the emulsion or coating material. The measurement standard of solid content is EN ISO 3251 and measurement condition is 1g/2h/130°C (namely, 1g of coating material is kept at a temperature of 130°C for 2 hours).

Herein, "modulus" refers to a ratio of moles. For example: in a chemical formula R₂O·n SiO₂, *n* is the ratio of the moles of SiO₂ to the moles of R₂O, and is referred as the modulus of R₂O·n SiO₂.

Herein, D₅₀ represents the particle diameter corresponding to when the cumulative particle size distribution percentage of a sample reaches 50%, and D₉₀ represents the particle diameter corresponding to when a cumulative particle size distribution percentage of the sample reaches 90%. "Particle size distribution" refers to the percentages of particles with different particle diameters in the total quantity of particles in a powder sample reflected by using specific instruments and methods. A laser diffraction method may be used for measurement. A measurement standard may refer to ISO 13320 *Particle size analysis* - *Laser diffraction methods.* Measurement device that may be used is, for example, a Mastersizer-series laser diffraction particle size analyzer.

Herein, "epoxy equivalent" refers to grammage of epoxy resin containing one equivalent epoxy groups with a unit of g/eq, namely [gram/equivalent].

"Degree of functionality" is defined as the number of epoxy groups contained in an epoxy resin molecule. Herein, "degree of functionality" refers to the average degree of functionality of an epoxy compound and is the average number of groups in one molecule, namely, the total equivalent number of epoxy functional groups that participate in the polycondensation reaction during an epoxy curing process. It can be determined by gel permeation chromatography (in accordance with ISO 13885-1 standard) and nuclear magnetic resonance spectroscopy. Herein, "degree of functionality" is calculated as the quotient of the weight-average molecular weight Mw and the epoxy equivalent of the epoxy resin.

Herein, weight-average molecular weight Mw is measured by gel chromatography. A reference standard of gel chromatography is ISO 13885-1 (*Binders for coatings and varnishes* - *Gel permeation chromatography (GPC)* - *Part 1: Tetrahydrofuran (THF) as eluent).*

Herein, structure reinforcing additive C1 refers to inorganic nanoparticles having reaction activity, and can form physical/chemical crosslinking points with functional groups of film-forming resins to introduce R-O-R and/or R-O-C bonds (R represents metal elements such as Si/Al/Ti/Zr/Zn) into the molecular chain to form a net structure. Inorganic nanoparticles that meet the above features may be prepared by using a vapor phase method, a vapor deposition method or a related hydrolysis and condensation method, but they cannot be sol type products.

In a preferred embodiment of the insulating coating of the present disclosure, the water-soluble metal inorganic salt A includes at least a water-soluble phosphate of aluminum.

The water-soluble phosphate of aluminum may be prepared by adding phosphoric acid (H₃PO₄) and aluminum hydroxide (Al(OH)₃) in a molar ratio of (2.3-3.5) : 1 into a reactor respectively, conducting reaction at a reaction temperature of 70°C to 135°C for 30 min to 120 min, and then cooling, filtering and discharging the reactants. In some preferred embodiments, the water-soluble phosphate of aluminum may be prepared by adding phosphoric acid (H₃PO₄) and aluminum hydroxide (Al(OH)₃) in a molar ratio of (3.0-3.4) : 1 into a reactor respectively, conducting reaction at a reaction temperature of 70°C to 135°C for 60 min to 90 min, and then cooling, filtering and discharging the reactants.

In the insulating coating of the present disclosure, the water dispersible organic emulsion B is a water dispersible organic emulsion rather than a water-soluble resin solution. The water dispersible organic emulsion B may be further divided into the following two categories according to film-forming types:
I. Water dispersible organic emulsions whose main film-forming mechanism is cross-linking and curing, such as epoxy emulsions and curing agents thereof.
II. Water dispersible organic emulsions whose main film-forming mechanism is a particle aggregation type film formation, such as polyester, polyurethane, polyacrylate, ethylene-vinyl acetate copolymer emulsions, etc. Among them, polyurethane and polyacrylate are preferably anionic water dispersible emulsions with high molecular weights, whose main film-forming manner is particle aggregation and auxiliary film-forming manner may also be self-crosslinking and curing under heat. It can affect the structural performances of coatings, such as hardness, scratch resistance, heat resistance, chemical resistance, etc.

In a preferred embodiment of the insulating coating of the present disclosure, a compound organic film-forming emulsion formed from at least two of epoxy emulsion and curing agent thereof, polyacrylate emulsion, polyester, polyurethane emulsion, and ethylene-vinyl acetate copolymer is used as a component of the water dispersible organic emulsion B, so that the coating formed by the insulating coating has better basic performances.

In the insulating coating of the present disclosure, solvent D2 is mainly used for increasing the solubility of organic resin and an auxiliary agent D1 in water, and meanwhile reducing the surface tension of the solution to prevent the occurrence of defects such as shrinkage cavities, missied areas in the coating during the baking process, and also has a defoaming effect.

For the preparation of the insulating coating of the present disclosure, water-soluble metal inorganic salt A, water dispersible organic emulsion B, additive C, auxiliary agent D1 and solvent D2 are added and mixed, and then an appropriate amount of pure water may be added and mixed evenly by stirring.

In a preferred embodiment of the insulating coating of the present disclosure, the final insulating coating has a solid content in the range of 15% to 40%, a Tu-4 cup viscosity in the range of 10 seconds to 40 seconds, and thus good accurate control over film thickness of the coating and highspeed roll coating operability can be achieved.

In the present disclosure, there is no particular limitation on the composition of the substrate of the silicon steel plate, and any composition capable of achieving the technical effects of the present disclosure in the prior art may be adopted.

The insulating coating, the silicon steel plate and the manufacturing method therefor of the present disclosure are further explained and described below with reference to accompanying drawings and examples, but the explanation and description do not constitute an inappropriate limitation on technical solutions of the present disclosure.

### Examples 1 to 6 and Comparative Examples 1 to 2

The insulating coatings of Examples 1 to 6 includes the following components: a water-soluble metal inorganic salt A, a water dispersible organic emulsion B, an additive C, an auxiliary agent D1 and a solvent D2. According to the components and proportions shown in the following Table 1 to Table 8, the above water-soluble metal inorganic salt A, the water dispersible organic emulsion B, the additive C, the auxiliary agent D1 and the solvent D2 were mixed and added, then an appropriate amount of pure water was added and mixed evenly by stirring to obtain the insulating coatings of Examples 1 to 6.

It should to be noted that in specific design, specific requirements for the water-soluble metal inorganic salt A, the water dispersible organic emulsion B, the additive C, the auxiliary agent D1 and the solvent D2 are as follows (1) to (4).
(1) The water-soluble metal inorganic salt A adopted in Examples 1 to 6 must include a water-soluble phosphate A1 of at least one of aluminum, zinc, magnesium and manganese.
(2) The water dispersible organic emulsion B adopted in Examples 1 to 6 includes at least one of an epoxy emulsion and the curing agent thereof, polyester, polyurethane, polyacrylate and an ethylene-vinyl acetate copolymer.
(3) The additive C adopted in Examples 1 to 6 includes a structure reinforcing additive C1 and a heat-resistance reinforcing additive C2. The structure reinforcing additive C1 may include inorganic nanoparticles; and the heat-resistance reinforcing additive C2 is selected from at least one of boric acid and a water-soluble salt of molybdenum, tungsten, vanadium or titanium.
(4) In part of Examples 1 to 6, the adopted auxiliary agent D1 includes: at least one of a defoaming agent, a wetting agent, a leveling agent, a thickening agent, an anti-settling agent and a flash rust inhibitor; and the adopted solvent D2 includes: at least two of ethylene glycol, glycerol, n-butyl alcohol, isobutyl alcohol, isopropyl alcohol, ethylene glycol methyl ether, ethylene glycol butyl ether, propylene glycol methyl ether, propylene glycol butyl ether and propylene glycol methyl ether acetate.

It should to be noted that in part of Examples 1 to 6, the water-soluble metal inorganic salt A further includes a water-soluble silicate A2 in addition to the water-soluble phosphate A1. The water-soluble silicate A2 includes sodium silicate and/or potassium silicate. The water-soluble silicate A2 has a modulus of less than 4.

Table 1 lists specific components of the insulating coating of Examples 1 to 6.

**Table 1**

| No. | Water-soluble metal inorganic salt A | | | Water dispersible organic emulsion B | | Additive C | | Auxiliary agent D 1 | Solvent D2 |
|---|---|---|---|---|---|---|---|---|---|
| | A1 | | A2 | Cross-linking and curing type film-forming emulsion | Particle aggregation type film-forming emulsion | C1 | C2 | | |
| | Aluminum salt | Other salt | Silicate | | | | | | |
| Example 1 | Aluminum dihydrogen phosphate | - | - | E.R.^{™} 915 epoxy emulsion and Omicure DDA5 dicyandiamide | Polyacrylate emulsion | Aerodisp^{®} W 640 ZX | (NH₄)₂M_{O}O₄ | BYK-348, ZT-709 | n-butyl alcohol and propylene glycol methyl ether |
| Example 2 | Aluminum dihydrogen phosphate | Zinc dihydrogen phosphate | Potassium silicate | Epikote 6520 Epoxy emulsion and Dicyanex^{®}1400F dicyandiamide | Polyurethane emulsion | HDK^{®}A3017 | Na₂WO₄ | BYK-346, BYK-025 | Glycerol and ethylene glycol methyl ether |
| Example 3 | Aluminum dihydrogen phosphate | Manganese dihydrogen phosphate | Sodium silicate | CT-E600 epoxy emulsion and Dicyanex^{®}1400F dicyandiamide | Polyacrylate emulsion | Aerosil^{®} 300 | - | BYK-025, Tego 245 | Isopropyl alcohol and propylene glycol methyl ether acetate |
| Example 4 | Self-made aluminum dihydrogen phosphate | Magnesium dihydrogen phosphate | Sodium silicate | Epikote 6520 epoxy emulsion and Omicure DDA5 dicyandiamide | Polyvinyl acetate emulsion (ethylene-vinyl acetate copolymer) | HDK^{®}A3017 | H₃BO₃ | Tego 245, BYK-025 | Ethylene glycol and propylene glycol butyl ether |
| Example 5 | Aluminum dihydrogen phosphate | Zinc dihydrogen phosphate | Potassium silicate | E.R.^{™} 917 epoxy emulsion and Dicyanex^{®}1400F dicyandiamide | Polyurethane emulsion | Aerosil^{®} 380 | - | BYK-346, ZT-709 | Ethylene glycol butyl ether and n-butyl alcohol |
| Example 6 | Aluminum dihydrogen phosphate | - | - | E.R.^{™} 915 epoxy emulsion and Dicyanex^{®}1400F dicyandiamide | - | CAB-O-SIL EH-5 | H₃BO₃ | BYK-346, Cellosize QP-100MH | Propylene glycol methyl ether and isobutyl alcohol |

| | | | | | | | | | |
|---|---|---|---|---|---|---|---|---|---|
| Note: In the above Table 1, Aerodisp^{®} W 640 ZX, HDK^{®} A3017, Aerosil^{®} 300, HDK^{®} A3017, Aerosil^{®} 380 and CAB-O-SIL EH-5 are inorganic nanoparticles and include at least one of SiO₂, Al₂O₃, TiO₂, ZnO, ZrO₂, Fe₃O₄ and CaCO₃. In the auxiliary agent D1, the added BYK-348 may be used as a wetting agent and a defoaming agent, BYK-346 may be used as a leveling agent and/or a wetting agent, BYK-025 is a defoaming agent, Tego 245 may be used as a wetting agent, a leveling agent and a defoaming agent, ZT-709 is a flash rust inhibitor, and Cellosize QP-100MH is an anti-settling agent or a thickening agent. | | | | | | | | | |

Though examples of using water-soluble salts of titanium and vanadium as the heat-resistance reinforcing additive C2 are not shown in Examples 1 to 6 in Table 1 above, it should be understood that in other embodiments of the present disclosure, water-soluble salts of titanium and vanadium may be used as the heat-resistance reinforcing additive C2.

As shown in the above Table 1, water-soluble phosphate containing aluminum was added into the water-soluble metal inorganic salt A adopted in Examples 1 to 6. The water-soluble phosphate containing aluminum was prepared by adding phosphoric acid (H₃PO₄) and aluminum hydroxide (Al(OH)₃) in a molar ratio of (2.3-3.5) : 1 into a reactor respectively, conducting reaction at a reaction temperature of 70°C to 135°C for 30 min to 120 min, and then cooling, filtering and discharging the reactants .

Besides, it can be seen from the above Table 1 that the curing agent of the epoxy emulsion in the water dispersible organic emulsion B adopted in Examples 1 to 6 is micronized dicyandiamide.

It should be understood that in other embodiments of the present disclosure, the curing agent of epoxy emulsion may also be amino resin, imidazole or polyisocyanate.

Table 2 lists the content of each component of the insulating coating of Examples 1 to 6 relative to the total mass of the water-soluble metal inorganic salt A and the water dispersible organic emulsion B (the total mass of the water-soluble metal inorganic salt A and the water dispersible organic emulsion B is 100%).

**Table 2**

| No. | Water-soluble metal inorganic salt A (weight percent of solid component) | | | Water dispersible organic emulsion B (weight percent of solid component) | | Additive C (weight percent of solid component) | Auxiliary agent D1 | Solvent D2 |
|---|---|---|---|---|---|---|---|---|
| | A1 | | A2 | Cross-linking and curing type film-forming emulsion | Particle aggregation type film-forming emulsion | | (Proportion relative to the total mass of component A and component B) | |
| | Aluminum salt | Other salt | Silicate | | | | | |
| Example 1 | 40% | 0 | 0 | 40% | 20% | 1% | 3% | 15% |
| Example 2 | 35% | 4.5% | 0.5% | 30% | 30% | 1% | 2% | 10% |
| Example 3 | 45% | 4% | 1% | 25% | 25% | 0.5% | 3% | 5% |
| Example 4 | 50% | 8% | 1% | 36% | 4% | 5% | 4% | 5% |
| Example 5 | 60% | 7% | 2% | 20% | 10% | 1% | 2% | 20% |
| Example 6 | 80% | 0 | 0 | 20% | 0 | 3% | 5% | 25% |

The average particle diameter D₅₀ of the aggregate of the inorganic nanoparticles of C1 adopted in Examples 1 to 6 is shown in Table 3 below.

Specific numerical values of average particle diameters D₅₀ and D₉₀ of the water dispersible organic emulsion B adopted in Examples 1 to 6 are listed in Table 3 below.

Besides, as shown in the Table 1, in Examples 1 to 6, polyurethane and polyacrylate in the water dispersible organic emulsion B are anionic water dispersible emulsions with high molecular weight. The curing agent of the epoxy emulsion in the water dispersible organic emulsion B adopted in Examples 1 to 6 is micronized dicyandiamide.

Specific particle diameter of the micronized dicyandiamide added in Examples 1 to 6 is listed in Table 3 below.

**Table 3**

| No. | Water dispersible organic emulsion B | | Micronized dicyandiamide | | Particle diameter D₅₀ of the aggregate of inorganic nanoparticles of C1 |
|---|---|---|---|---|---|
| | Average particle diameter D₅₀ | Average particle diameter D₉₀ | Average particle diameter D₅₀ | Average particle diameter D₉₀ | |
| Example 1 | ≤1.2 µm | <_3.0 µm | ≤4 µm | ≤9 µm | About 80 nm |
| Example 2 | ≤1.0 µm | ≤2.0 µm | ≤5 µm | ≤10 µm | ≤150 nm |
| Example 3 | ≤0.5µm | ≤1.0µm | ≤5 µm | ≤10 µm | About 350 nm /primary particle diameter 7 nm |
| Example 4 | ≤1.6µm | ≤2.5µm | ≤4 µm | ≤9 µm | ≤150 nm |
| Example 5 | ≤0.8µm | ≤1.5µm | ≤5 µm | ≤10 µm | About 400 nm /primary particle diameter 7 nm |
| Example 6 | ≤1.0 µm | ≤2.0 µm | ≤5 µm | ≤10 µm | About 550 nm /primary particle diameter 7 nm |

| | | | | | |
|---|---|---|---|---|---|
| Note: In the above Table 3, D₅₀ represents the particle diameter corresponding to when the cumulative particle size distribution percentage of the sample reaches 50%, and D₉₀ represents the particle diameter corresponding to when the cumulative particle size distribution percentage of the sample reaches 90%. D₅₀ and D₉₀ present a point value every time the particle size distribution is tested. However, due to errors or variations of the test itself, D50 and D90 are recorded in Table 3 as a numerical range rather than one numerical value. | | | | | |

The epoxy equivalent, weight-average molecular weight Mw and degree of functionality of the epoxy emulsion in the water dispersible organic emulsion B in the Examples 1 to 6 are listed in Table 4 below.

**Table 4**

| No. | Epoxy equivalent of epoxy emulsion (g/eq) | Weight-average molecular weight Mw of epoxy emulsion | Degree of functionality of epoxy emulsion |
|---|---|---|---|
| Example 1 | 480 | 700-1500 | 2-3 |
| Example 2 | 550 | 800-1500 | 2-3 |
| Example 3 | 1000 | 1500-3000 | 2-3 |
| Example 4 | 550 | 800-1500 | 2-3 |
| Example 5 | 200 | 300-500 | 2-3 |
| Example 6 | 480 | 700-1500 | 2-3 |

In Examples 1 to 6, the proportion of the solid content in mass percentage of the epoxy emulsion in the water dispersible organic emulsion B relative to that of the epoxy emulsion and the curing agent thereof is listed in Table 5 below.

In Examples 1 to 6, the proportion of the ethylene-vinyl acetate copolymer in the water dispersible organic emulsion B relative to the water dispersible organic emulsion B, and the mass percentage content of vinyl acetate in the ethylene-vinyl acetate copolymer are listed in Table 5 below.

**Table 5**

| No. | Proportion of the solid content in mass percentage of epoxy emulsion relative to the total of epoxy emulsion and curing agent thereof | Proportion of ethylene-vinyl acetate copolymer relative to water dispersible organic emulsion B | Mass percentage content of vinyl acetate in ethylene-vinyl acetate copolymer |
|---|---|---|---|
| Example 1 | 98% | - | - |
| Example 2 | 98% | - | - |
| Example 3 | 97% | - | - |
| Example 4 | 97% | 10% | 25% |
| Example 5 | 96% | - | - |
| Example 6 | 95% | - | - |

It should be noted that although among Examples 1 to 6, one the water dispersible organic emulsion B of Example 4 comprises ethylene-vinyl acetate copolymer, there are many examples in which ethylene-vinyl acetate copolymer was added that are not shown in the present disclosure.

Table 6 lists the solid content ratio of water-soluble phosphate A1 relative to water-soluble metal inorganic salt A, the solid content ratio of aluminum salt relative to water-soluble phosphate A1 (in mass percentage), the solid content ratio of water-soluble metal inorganic salt A to water dispersible organic emulsion B (in part by mass), ratio of additive C to the total solid content of water-soluble metal inorganic salt A and water dispersible organic emulsion B, and contents of auxiliary agent D1 and solvent D2 relative to the total mass of water-soluble metal inorganic salt A and water dispersible organic emulsion B in the insulating coating of the Examples 1 to 6.

**Table 6**

| No. | Solid content ratio of aluminum salt relative to water-soluble phosphate A1 (in mass percentage) | Solid content ratio of water-soluble phosphate A1 relative to water-soluble metal inorganic salt A (A1/(A1+A2)) | Solid content ratio of water-soluble metal inorganic salt A to water dispersible organic emulsion B (in part by mass) | Ration of additive C to the total solid content of water-soluble metal inorganic salt A and water dispersible organic emulsion B | Contents of auxiliary agent D1 and solvent D2 relative to the total mass of water-soluble metal inorganic salt A and water dispersible organic emulsion B |
|---|---|---|---|---|---|
| Example 1 | 100% | 100% | 40:60 | 1% | 3% and 15% |
| Example 2 | 88.6% | 98.8% | 40:60 | 1% | 2% and 10% |
| Example 3 | 91.8% | 98.0% | 50:50 | 0.5% | 3% and 5% |
| Example 4 | 86.2% | 98.3% | 60:40 | 5% | 4% and 5% |
| Example 5 | 89.6% | 97.1% | 70:30 | 1% | 2% and 20% |
| Example 6 | 100% | 100% | 80:20 | 3% | 5% and 25% |

Different from the insulating coating in the above Examples 1 to 6, comparative Examples 1 to 2 are commercially available common coatings.

Comparative coating of Comparative Example 1 is a commercially available Remisol EB 5350S type coating, which is a typical commercially available coating for C-5 type coatings on non-oriented silicon steel.

Comparative coating of Comparative Example 2 is a commercially available Remisol EB 549 type coating, which is a typical commercially available coating for C-3 type self-bonding coatings on non-oriented silicon steel.

Each of the insulating coatings of Examples 1 to 6 and the comparative coatings of Comparative Examples 1 to 2 was applied on two surfaces of the substrate of a silicon steel plate, and then was dried and cured at a plate baking temperature of 150°C to 250°C to obtain a finished silicon steel plate with different coatings. The dry film thickness of the coating on one surface/side of the plate is in the range of 0.3 µm to 2 µm.

It should be noted that the silicon steel plate substrates of Examples 1 to 6 and Comparative Examples 1 to 2 have the same mass percentage content of each chemical element. The commercially available B30A250 grade non-oriented silicon steel was used as the silicon steel plate substrate of Examples 1 to 6 and Comparative Examples 1 to 2.

Table 7 lists process parameters of finished silicon steel plates obtained by coating the B30A250 grade non-oriented silicon steel with the insulating coating of Examples 1 to 6 and the comparative coating of Comparative Examples 1 to 2.

**Table 7**

| No. | Dry film thickness of coating on one surface/side (µm) | Plate baking temperature (°C) |
|---|---|---|
| Example 1 | 0.7 | 180 |
| Example 2 | 0.5 | 170 |
| Example 3 | 1.0 | 190 |
| Example 4 | 1.2 | 200 |
| Example 5 | 1.4 | 210 |
| Example 6 | 1.6 | 240 |
| Comparative Example 1 | 1.0 | 250 |
| Comparative Example 2 | 2.0 | 160 |

The obtained finished silicon steel plates with coatings of Examples and Comparative Examples were sampled to obtain sample steel plates, and various tests were performed on the sample steel plates. Test results are listed in Table 8 below.

Table 8 lists the test results of related performance of the finished silicon steel plates in the Examples 1 to 6 and the comparative Examples 1 to 2.

**Table 8**

| Performance | | | | | | | | |
|---|---|---|---|---|---|---|---|---|
| | Example 1 | Example 2 | Example 3 | Example 4 | Example 5 | Example 6 | Comparative Example 1 | Comparative Example 2 |
| Cold bonding control | ⊙ | ⊚ | ⊚ | ⊚ | ⊚ | ⊙ | ⊚ | ⊚ |
| Scratch resistance | ⊙ | ⊚ | ⊚ | ⊚ | ⊚ | ⊙ | ⊚ | ⊚ |
| Ethyl alcohol resistance | ⊙ | ⊙ | ⊚ | ⊙ | ⊚ | ○ | ⊚ | ○ |
| Salt spray corrosion resistance | ⊚ | ⊚ | ⊚ | ⊚ | ⊚ | ⊙ | ⊚ | ⊚ |
| Interlamination resistance | ⊚ | ⊚ | ⊚ | ⊚ | ⊙ | ⊙ | ⊚ | ⊚ |
| Bonding strength | ⊙ | ⊙ | ○ | ⊙ | ○ | △ | × | ⊚ |
| Stress relief annealing resistance | ○ | ○ | ⊙ | ⊚ | ⊚ | ⊚ | ○ | × |
| Weldability | △ | △ | ○ | ⊙ | ⊚ | ⊚ | △ | × |

| | | | | | | | | |
|---|---|---|---|---|---|---|---|---|
| Note: meanings represented by evaluation symbols are: ⊚ represents excellent; ⊙ represents good; O represents ordinary; △ represents bad; × represents unacceptable. | | | | | | | | |

As shown in Table 8, compared with Comparative Example 1 and Comparative Example 2, performances of the finished silicon steel plates of Examples 1 to 6 are significantly better. Referring to Table 8 and in combination with Table 1 to Table 7, it can be seen that in Examples 1 to 6, the higher the content of organic components in the coating, the better the bonding strength, corrosion resistance and insulativity of the coating formed on the silicon steel plate, but the worse the heat resistance such as annealing resistance and weldability. Meanwhile, the coating formed by the coating materials containing compound organic film-forming emulsions comprising two or more types of cross-linking curing film-forming emulsions and particle aggregation film-forming emulsions has better cold bonding defect control and scratch resistance, and better overall performances.

As shown in Table 8, the coatings of Examples 3 to 5 has the performances of a C-5 type coating for non-oriented silicon steel and also has the bonding performances specific to a C-3 type self-bonding coating (i.e., it can have the performance of both) and are the best embodiments.

Comparative Example 1 is a typical commercially available coating of the C-5 type coating for non-oriented silicon steels. This coating is good in general properties but has no adhesive properties at all. Comparative Example 2 is a typical commercially available coating of the C-3 type self-bonding coating for non-oriented silicon steels. This self-bonding coating is good in related properties but completely unable to withstand thermal treatment of 250°C or above, and requires a high coating film thickness, resulting in high product costs.

Besides, the finished silicon steel plates of Examples 1 to 6 were slit into coils, punched, and laminated to form an iron core. During assembling, different types of magnetic steels were inserted into a reserved iron core slot, and side wall surfaces of magnetic steels and iron cores were filled with an adhesive. Then, secondary curing and heating treatment was performed. After curing, magnetic steel fixing and iron core assembling were completed.

The secondary curing process was performed as follows: heating at an iron core temperature of 150°C to 300°C and a pressure load of 1 MPa to 5 MPa for 1 min to 4 h.

Similar to the effects of steels with a self-bonding coating, the higher the bonding strength of the coating of the obtained silicon steel plate, the stronger the overall binding force of the corresponding iron core prepared by the silicon steel plate. In turn, it is more beneficial for improving the fixation strength, the overall vibration frequency and the efficiency of the iron core and effectively reducing noise.

Fig. 1 schematically shows a plot of bonding strength and curing degree as a function of plate baking temperature during manufacturing of a silicon steel plate .

As shown in Fig. 1, an appropriate plate baking temperature (peak metal temperature PMT) is 150°C to 250°C. The higher the temperature, the shorter the baking time required.

It can be seen from Fig. 1 that influence of the baking curing process temperature on performance of the coating steel plate is obvious. The lower the plate baking temperature, the lower the curing degree of the coating, the better the bonding strength of the coated steel sheet after lamination and forming and hot-pressing curing, but the worse the scratch resistance (protective property), weldability, corrosion resistance, adhesiveness and cold bonding controllability of the coating, and even the problem of poor stability of the continuous production of the coated steel coils is caused.

It should be noted that combination manners of the technical features in the present disclosure are not limited to the combination manners recorded in the claims or the combination manners recorded in the specific embodiments of the present disclosure. All the technical features recorded in the present disclosure may be freely combined or united in any manner unless they have contradictions with one another.

It should also be noted that the above given embodiments are only an illustration of specific examples of the present disclosure. The present disclosure is not limited to the above embodiments. Similar variations or transformations which can be easily obtained or derived by those skilled in the art from the contents disclosed by the present disclosure fall within the protection scope of the present disclosure.

## Claims

1. An insulating coating, comprising the following components:
a water-soluble metal inorganic salt A comprising a water-soluble phosphate A1, wherein the water-soluble phosphate A1 includes a water-soluble phosphate of at least one of aluminum, zinc, magnesium and manganese;
a water dispersible organic emulsion B comprising at least one of an epoxy emulsion and a curing agent thereof, a polyester, a polyurethane, a polyacrylate and an ethylene-vinyl acetate copolymer;
an additive C comprising at least one of a structure reinforcing additive C1 and a heat-resistance reinforcing additive C2, wherein the structure reinforcing additive C1 comprises inorganic nanoparticles, and wherein the heat-resistance reinforcing additive C2 is selected from at least one of boric acid and water-soluble salts of molybdenum, tungsten, vanadium or titanium;
an auxiliary agent D1; and
a solvent D2;
wherein the solid content ratio of the water-soluble metal inorganic salt A to the water dispersible organic emulsion B is (35-85) : (15-65) in part by mass.

2. The insulating coating of claim 1, wherein the solid content ratio of the water-soluble metal inorganic salt A to the water dispersible organic emulsion B is (40-75) : (25-60) in part by mass.

3. The insulating coating of claim 1, wherein the water-soluble metal inorganic salt A further comprises a water-soluble silicate A2.

4. The insulating coating of claim 3, wherein the water-soluble silicate A2 has a modulus of less than 4.

5. The insulating coating of claim 4, wherein the water-soluble silicate A2 includes sodium silicate and/or potassium silicate.

6. The insulating coating of claim 1, wherein in terms of mass percentage, the water-soluble phosphate A1 accounts for 95% to 100% of the solid content of the water-soluble metal inorganic salt A.

7. The insulating coating of claim 1, wherein the water-soluble metal inorganic salt A comprises at least a water-soluble phosphate of aluminum.

8. The insulating coating of claim 7, wherein in terms of mass percentage, the water-soluble phosphate of aluminum accounts for 70% to 100% of the solid content of the water-soluble phosphate A1.

9. The insulating coating of claim 1, wherein the water dispersible organic emulsion B has an average particle diameter D₅₀ of 2 µm or less, an average particle diameter D₉₀ of 5 µm or less, and a maximum particle diameter of 10 µm or less.

10. The insulating coating of claim 9, wherein the water dispersible organic emulsion B has an average particle diameter D₅₀ of 1 µm or less and an average particle diameter D₉₀ of 3 µm or less.

11. The insulating coating of claim 1, wherein the curing agent of the epoxy emulsion is selected from at least one of dicyandiamide, amino resin, imidazole and polyisocyanate.

12. The insulating coating of claim 11, wherein the curing agent of the epoxy emulsion is micronized dicyandiamide having an average particle diameter D₅₀ of 5 µm or less and an average particle diameter D₉₀ of 10 µm or less.

13. The insulating coating of claim 1, wherein the water dispersible organic emulsion B comprises the epoxy emulsion and the curing agent thereof, and in terms of mass percentage, the epoxy emulsion accounts for 90% to 99%, preferably 95% to 98% of the total solid content of the epoxy emulsion and the curing agent thereof.

14. The insulating coating of claim 1, wherein the epoxy emulsion has an epoxy equivalent in the range of 100 g/eq to 2000 g/eq, preferably 200 g/eq to 1000 g/eq; a weight-average molecular weight Mw in the range of 200 to 4000, preferably 300 to 3000; and a degree of functionality in the range of 2 to 3.

15. The insulating coating of claim 1, wherein the water dispersible organic emulsion B comprises an ethylene-vinyl acetate copolymer, and in terms of mass percentage, the ethylene-vinyl acetate copolymer accounts for 0 to 20% of the solid content of the water dispersible organic emulsion B.

16. The insulating coating of claim 15, wherein the content of vinyl acetate in the ethylene-vinyl acetate copolymer is in the range of 10% by mass to 40% by mass, preferably 15% by mass to 30% by mass.

17. The insulating coating of claim 1, wherein each of the polyurethane and the polyacrylate is an anionic water dispersible emulsion with high molecular weight.

18. The insulating coating of claim 1, wherein the mass of the additive C relative to the total mass of the water-soluble metal inorganic salt A and the water dispersible organic emulsion B is in the range of 0.1% to 10%, preferably 0.5% to 5%.

19. The insulating coating of claim 1, wherein aggregates of the inorganic nanoparticles have an average particle diameter in the range of 50 nm to 800 nm, preferably 80 nm to 500 nm.

20. The insulating coating of claim 1, wherein the inorganic nanoparticles are metal oxides selected from at least one of SiO₂, Al₂O₃, TiO₂, ZnO, ZrO₂, Fe₃O₄ and CaCO₃.

21. The insulating coating of claim 1, wherein the inorganic nanoparticles are SiO₂, Al₂O₃, TiO₂, ZnO or a composite oxide thereof.

22. The insulating coating of claim 1, wherein the heat-resistance reinforcing additive C2 is selected from at least one of boric acid, ammonium molybdate and sodium tungstate.

23. The insulating coating of claim 1, wherein the total mass of the auxiliary agent D1 and the solvent D2 relative to the total mass of the water-soluble metal inorganic salt A and the water dispersible organic emulsion B is in the range of 5% to 35%.

24. The insulating coating of claim 1, wherein the auxiliary agent D1 is selected from at least one of a defoaming agent, a wetting agent, a leveling agent, a thickening agent, an anti-settling agent and a flash rust inhibitor.

25. The insulating coating of claim 1, wherein the solvent D2 includes at least two of ethylene glycol, glycerol, n-butyl alcohol, isobutyl alcohol, isopropyl alcohol, ethylene glycol methyl ether, ethylene glycol butyl ether, propylene glycol methyl ether, propylene glycol butyl ether and propylene glycol methyl ether acetate.

26. The insulating coating of claim 1, wherein the insulating coating has a solid content in the range of 15% to 40%.

27. A silicon steel plate, comprising a substrate, wherein the substrate has a coating formed of the insulating coating of any one of claims 1 to 26 on its surface.

28. The silicon steel plate of claim 27, wherein the coating has a single-sided dry film thickness in the range of 0.3 µm to 2 µm, preferably 0.5 µm to 1.5 µm.

29. A method of manufacturing the silicon steel plate of claim 27 or 28, comprising the following steps: applying the insulating coating of any one of claims 1 to 26 on a surface of a substrate of the silicon steel plate; and drying the insulating coating at a plate baking temperature of 150°C to 250°C to form a coating.
